# FASCICULE DE BREVET EUROPEEN

(11) **EP 1 004 470 B1**
(45) Date de publication et mention de la délivrance du brevet: **28.08.2002**
(21) Numéro de dépôt: 99402938.7
(22) Date de dépôt: 25.11.1999
(51) Int. Cl.: B60K 20/02

(54) **Dispositif de passage étanche d'au moins un câble de commande d'une boîte de vitesse dans un véhicule automobile**
Vorrichtung zum abgedichteten Durchführen wenigstens eines Kabels zur Schaltgetriebesteuerung in einem Kraftfahrzeug
Device to sealingly guide at least one change speed gear box control cable in a motor vehicle

(30) Priorité: 27.11.1998 FR 9814990
(43) Date de publication de la demande: 31.05.2000
(73) Titulaire: AUTOMOBILES PEUGEOT, 75116 Paris (FR); AUTOMOBILES CITROEN, 92200 Neuilly-sur-Seine (FR)
(72) Inventeur: Bloret, Jean-Pierre, 35700 Rennes (FR)
(74) Mandataire: Bouget, Lucien

(56) Documents cités:
- EP-A- 0 679 548
- US-A- 5 419 214

## Description

L'invention concerne un dispositif de passage étanche d'au moins un câble de commande d'une boîte de vitesses entre l'habitacle d'un véhicule automobile et une zone extérieure à l'habitacle dans laquelle est disposée la boîte de vitesses.

De manière à obtenir une plus grande latitude de choix quant à la position de la commande manuelle de vitesses à l'intérieur de l'habitacle d'un véhicule automobile, on a proposé de relier par des câbles la commande manuelle disposée à l'intérieur de l'habitacle, à un élément de commande mécanique de la boîte de vitesses qui est disposé à l'extérieur de l'habitacle et généralement dans le compartiment moteur du véhicule. Le passage des câbles à l'intérieur de l'habitacle du véhicule doit être réalisé de manière à assurer une bonne étanchéité autour des câbles, pour éviter des entrées d'eau ou de poussières ou encore la propagation d'odeurs à l'intérieur de l'habitacle du véhicule. Il est également nécessaire, pour préserver le confort du véhicule automobile, de limiter au maximum les transmissions de bruit entre l'extérieur et l'intérieur de l'habitacle qui est délimité par une paroi de carrosserie.

Les dispositifs de passage étanche des câbles doivent permettre d'assurer des déplacements relatifs entre la boîte de vitesses et la paroi de la carrosserie, sans exercer de contraintes excessives sur les câbles et sans interrompre ou gêner la transmission et les déplacements des câbles assurant la commande de la boîte de vitesses, pour la sélection et le passage des vitesses.

En effet, la boîte de vitesses est généralement solidaire du groupe motopropulseur du véhicule automobile qui est relié à la carrosserie du véhicule par des éléments élastiques d'amortissement et de filtrage. Du fait des déplacements du groupe motopropulseur par rapport à la carrosserie, les déplacements maximaux, au niveau du passage des câbles dans l'habitacle, peuvent être évalués à 10 mm dans toutes les directions.

Pour assurer le passage des câbles de commande entre l'extérieur et l'intérieur de l'habitacle, dans une zone située dans la partie centrale de l'habitacle dans la direction de la largeur du véhicule, on prévoit des ouvertures de traversée dans la paroi de carrosserie ou caisse du véhicule automobile et dans une paroi d'isolation disposée à une certaine distance de la paroi de carrosserie à l'intérieur de l'habitacle. Dans la zone centrale de l'habitacle, où est placée la commande manuelle de vitesses, la paroi d'isolation constitue, au-dessus de la paroi de carrosserie, une zone surélevée par rapport au plancher du véhicule au niveau de laquelle peut être prévue la traversée des câbles de commande de la boîte de vitesses.

Jusqu'ici on ne connaissait pas de dispositif assurant un passage étanche des câbles de commande dans l'habitacle du véhicule automobile qui soit parfaitement efficace quant à ses capacités d'isolation et en particulier d'isolation acoustique de l'habitacle et qui puisse être monté de manière simple et rapide sur le véhicule automobile.

Le but de l'invention est donc de proposer un dispositif de passage étanche d'au moins un câble de commande d'une boîte de vitesses entre l'habitacle d'un véhicule automobile dans lequel est disposée une commande manuelle reliée au câble et une zone extérieure à l'habitacle dans laquelle est située la boîte de vitesses, à travers une paroi de carrosserie et une paroi d'isolation acoustique de l'habitacle comportant chacune une ouverture de traversée, ce dispositif assurant une parfaite isolation de l'habitacle et en particulier une parfaite isolation acoustique et un guidage efficace des câbles sans exercer de force excessive de retenue sur les câbles et pouvant être réalisé et monté facilement sur le véhicule automobile avec des coûts réduits.

Dans ce but, le dispositif de passage étanche suivant l'invention comporte :
- un fourreau tubulaire de passage de câbles en matériau élastomère comportant, à une première extrémité longitudinale, une lèvre d'appui périphérique débordant vers l'extérieur, pour sa mise en appui sur une surface externe de la paroi d'isolation dirigée vers l'habitacle, autour de l'ouverture de la paroi d'isolation acoustique et, à une seconde extrémité longitudinale, une lèvre d'accrochage sur un rebord de la paroi de carrosserie entourant l'ouverture de la paroi de carrosserie,
- une première et une seconde semelles en matériau élastomère d'obturation de l'ouverture de la paroi de carrosserie, comportant chacune un rebord périphérique d'appui sensiblement plat débordant vers l'extérieur, une paroi profilée à l'intérieur du rebord d'appui et un manchon de traversée de câbles, dans une partie centrale de la paroi profilée,
- ainsi qu'un flasque métallique d'une forme telle qu'il puisse recouvrir, dans une position d'assemblage et de montage du dispositif de passage sur le véhicule automobile, les rebords périphériques superposés des semelles mises en appui autour de l'ouverture contre la paroi de carrosserie, du côté opposé à l'habitacle, dont les fourreaux en appui mutuel dans le prolongement axial l'un de l'autre assurent le passage continu du câble et une disposition relative des parois profilées, telle qu'un espace fermé soit ménagé entre les deux parois profilées, et
- des moyens de fixation mécaniques du flasque métallique et des semelles sur la paroi de carrosserie.

Afin de bien faire comprendre l'invention, on va maintenant décrire à titre d'exemple, en se référant aux figures jointes en annexe, un dispositif de passage étanche de câbles de commande d'une boîte de vitesses d'un véhicule automobile.

La figure 1 est une vue en perspective d'un ensemble de commande à câbles de la boîte de vitesses d'un véhicule automobile et d'un dispositif de passage de câbles de commande de cet ensemble.

La figure 2 est une vue en coupe du dispositif de passage étanche des câbles de commande.

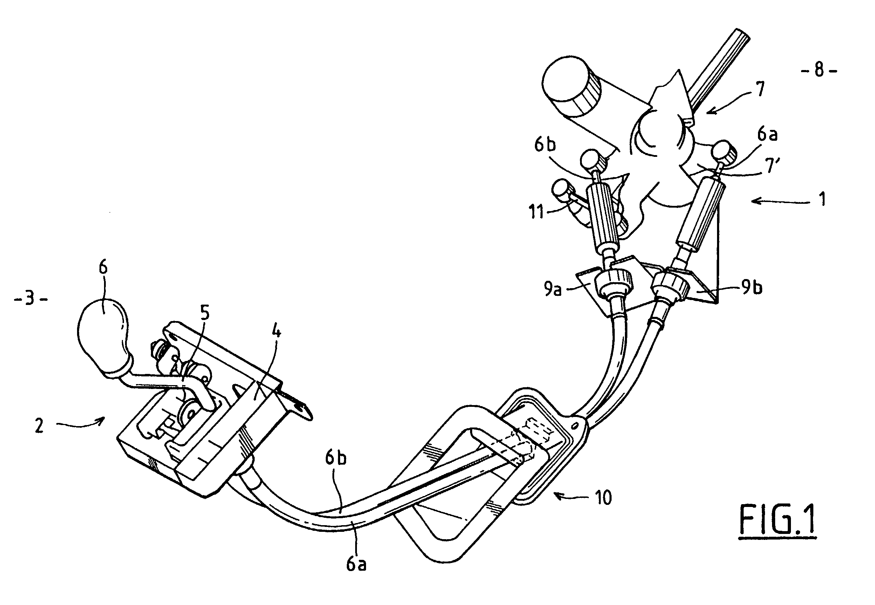

Sur la figure 1, on voit l'ensemble de commande de vitesses d'un véhicule automobile désigné de manière générale par le repère 1. Les éléments de carrosserie délimitant l'habitacle et le compartiment moteur du véhicule automobile n'ont pas été représentés, de manière à rendre l'ensemble de commande 1 entièrement visible.

L'ensemble de commande 1 comporte une commande manuelle 2 disposée à l'intérieur de l'habitacle 3 du véhicule automobile, la commande manuelle 2 comportant un boîtier 4 fixé sur une partie de l'habitacle du véhicule automobile, dans une position centrale suivant la largeur de l'habitacle et un levier de vitesses 5 sur lequel est fixé un pommeau 6 monté mobile dans le boîtier 4, de manière que le conducteur du véhicule puisse effectuer les sélections et passages de vitesses pour la conduite du véhicule automobile.

Les déplacements du levier 5 assurant la commande de la boîte de vitesses 7 disposée dans le compartiment moteur 8 du véhicule automobile sont transmis à l'équipage de commande mobile 7' de la boîte de vitesse, par l'intermédiaire de deux câbles de commande 6a et 6b qui sont reliés à leurs extrémités opposées au levier de vitesse 5, à deux bras d'actionnement de l'équipage mobile 7' de la boîte de vitesses 7. Les câbles 6a et 6b sont gainés sur la plus grande partie de leur longueur et traversent un dispositif de passage étanche 10 assurant la sortie des câbles 6a et 6b de l'habitacle 3 du véhicule automobile, avant que les câbles 6a et 6b ne parviennent dans le compartiment moteur 8.

L'extrémité de la partie gainée des câbles 6a et 6b est reliée à une platine de fixation respective 9a et 9b, à l'intérieur du compartiment moteur 8. Entre les platines 9a et 9b et les fixations des câbles sur l'équipage mobile 7' de la boite de vitesses, les câbles 6a et 6b sont protégés par des manchons de caoutchouc.

L'équipage mobile 7' est relié à un axe de commande de la boîte de vitesses par l'intermédiaire d'une biellette 11.

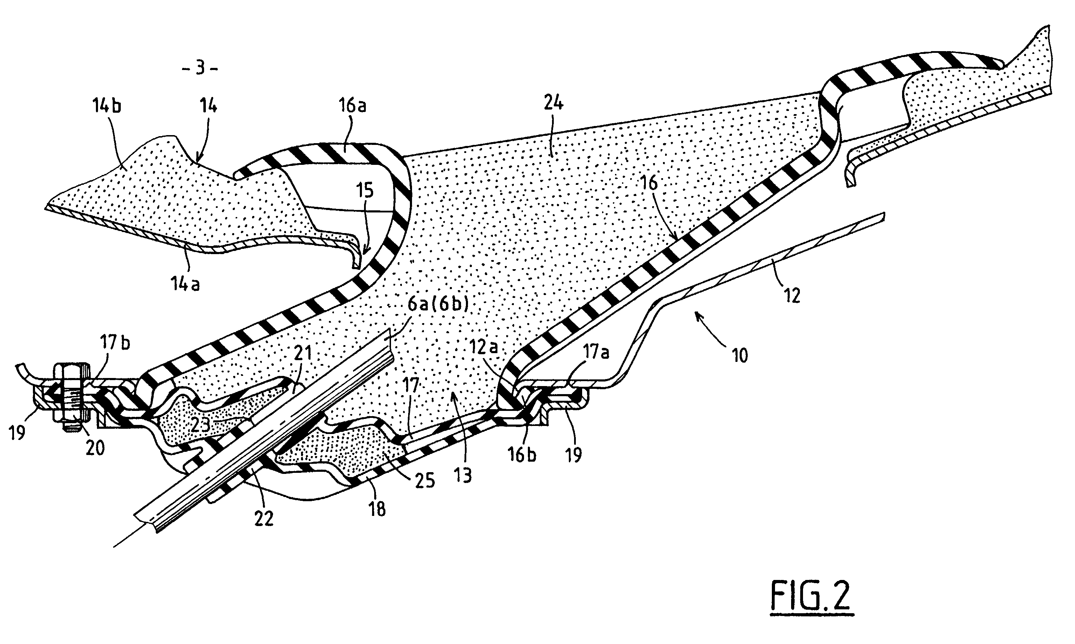

Sur la figure 2, on a représenté en coupe le dispositif de passage étanche 10 des câbles de commande de vitesses 6a, 6b, à travers une double paroi de l'habitacle 3 du véhicule automobile.

La double paroi de l'habitacle 3 à travers laquelle on prévoit le passage des câbles 6a et 6b comporte une tôle de carrosserie 12 ayant une partie en forme de cuvette traversée par une ouverture 13 de passage de câbles et une paroi d'isolation acoustique 14 disposée au-dessus et espacée de la tôle de carrosserie 12 traversée par une ouverture de passage de câbles 15.

La tôle de carrosserie 12 peut constituer une paroi inférieure de l'habitacle disposée dans la zone centrale de l'habitacle, dans la direction de la largeur du véhicule. La paroi d'isolation14 peut être constituée d'une tôle 14a fixée au-dessus de la tôle 12 avec un certain écartement et recouverte d'un tapis souple14b assurant l'isolation acoustique de l'habitacle 3.

Le dispositif de traversée étanche 10 comporte un fourreau 16 de forme évasée dont la section transversale présente une forme sensiblement rectangulaire, comme il est visible sur la figure 1. Le fourreau 16 est délimité par des parois latérales sensiblement planes dirigées suivant une direction correspondant à la direction générale axiale longitudinale du fourreau 16.

A une première extrémité longitudinale, le fourreau 16 comporte une lèvre périphérique 16a débordant vers l'extérieur ayant la forme générale d'un cadre rectangulaire et présentant une légère courbure concave dirigée vers la seconde extrémité du fourreau 16 suivant laquelle est disposée une seconde lèvre 16b repliée vers la première extrémité du fourreau 16.

Le fourreau 16 est réalisé en une seule pièce, par exemple par moulage d'un matériau élastomère.

Les parois latérales planes du fourreau 16 sont reliées à la lèvre 16a et à la lèvre 16b, par l'intermédiaire de parties de parois courbes et sont inclinées par rapport aux plans d'appui de la lèvre d'appui 16a et de la lèvre d'accrochage 16b.

Comme il est visible sur la figure 2, la lèvre 16a, placée à la périphérie de la première extrémité du fourreau 16, est une lèvre venant en appui contre la surface externe de la paroi d'isolation14 dirigée vers l'habitacle 3, lorsque le fourreau 16 est mis en place à l'intérieur des passages de traversée des câbles 6a et 6b, au niveau des ouvertures 13 de la paroi de carrosserie 12 et 15 de la paroi d'isolation14. La seconde lèvre 16b, disposée à la périphérie de la seconde extrémité du fourreau 16, est une lèvre permettant l'accrochage de la seconde extrémité du fourreau 16 sur un bord tombé 12a de la tôle de carrosserie 12 dirigé vers l'extérieur de l'habitacle 3 et disposé suivant toute la périphérie de l'ouverture 13.

Pour réaliser la mise en place du fourreau 16 du dispositif de passage 10, on introduit, par l'intérieur de l'habitacle 3, la seconde extrémité du fourreau 16 dans l'ouverture 15 de la paroi 14, puis dans l'ouverture 13 de la tôle de carrosserie 12. L'accrochage de la seconde lèvre 16b du fourreau 16 sur le bord tombé 12a de la tôle 12 est réalisé par déformation du matériau élastomère du fourreau 16.

La lèvre d'appui élastique 16a est alors légèrement déformée, au voisinage de son bord externe par la pression de contact sur la surface externe du tapis 14b de la paroi d'isolation 14. Le tapis 14b est lui-même légèrement déformé par la partie de bord d'extrémité externe de la lèvre 16a, de telle sorte qu'une bonne étanchéité est réalisée entre la lèvre d'appui 16a et la paroi d'isolation 14. La lèvre d'accrochage 16b assure d'autre part une fixation résistante du fourreau 16 sur la tôle 12 constituant la paroi de carrosserie.

Le dispositif de passage étanche des câbles 6a et 6b comporte, en plus du fourreau 16, des moyens de fermeture étanche de l'ouverture 13 de la tôle de carrosserie 12. Ces moyens de fermeture étanche comportent une première semelle 17 et une seconde semelle 18 en matériau élastomère ainsi qu'un flasque métallique 19 et des ensembles de fixation à vis ou vis et écrou 20 du flasque 19 sur la tôle de carrosserie12, pour assurer la fixation et le serrage étanche d'un bord périphérique des semelles 17 et 18.

Chacune des semelles 17 et 18 comporte un rebord périphérique pratiquement plat ayant la forme d'un cadre polygonal, une paroi interne profilée comportant des plis et des parties ondulées successives dans une direction longitudinale de la semelle et un manchon double, respectivement 21 et 22, de passage de câbles, à la partie centrale de la paroi de la semelle. Les manchons 21 et 22assurant le passage des câbles 6a et 6b sont des manchons doubles présentant une section transversale oblongue et deux alésages permettant chacun le passage d'un câble 6a ou 6b.

La paroi interne profilée des semelles 17 et 18 présente une forme adaptée permettant aux câbles 6a et 6b traversant les manchons 21 et 22 de se déplacer par rapport à la paroi de carrosserie sans que les semelles exercent sur les câbles des contraintes excessives. La forme de la paroi interne des semelles est également définie de manière à assurer une bonne résistance à la destruction des semelles, lors d'une utilisation de longue durée.

La semelle 17 constitue la semelle interne de l'ensemble de fermeture étanche de l'ouverture 13 dirigée vers l'intérieur de l'habitacle 3 et la semelle 18 constitue la semelle externe dirigée vers l'extérieur de l'habitacle. Dans la position de montage de l'ensemble étanche, comme représenté sur la figure 2, les bords périphériques des semelles 17 et 18 sont superposés, les semelles étant emboîtées l'une dans l'autre par l'intermédiaire de parties courbes des semelles délimitant vers l'intérieur les rebords périphériques. Le flasque 19, qui recouvre les bords périphériques des semelles 17 et 18, assure le serrage de ces bords périphériques en position superposée, contre la surface externe de la tôle de carrosserie 12, autour de l'ouverture 13. La semelle interne 17 comporte, suivant son bord périphérique, une nervure 17a venant s'écraser, lors du serrage du flasque 19 par les ensembles à vis et écrou 20 contre la surface externe de la tôle de carrosserie 12, améliorant ainsi l'étanchéité de la jonction entre la semelle 17 et la tôle de carrosserie 12. Les bords périphériques des semelles 17 et 18 sont traversées par des ouvertures placées de manière superposée, lorsque les semelles 17 et 18 sont assemblées comme il est visible sur la figure 2. Les ouvertures des bords périphériques des semelles 17 et 18 sont elles-mêmes placées en vis-à-vis d'ouvertures traversant la tôle de carrosserie 12 et d'ouvertures traversant le flasque 19, pour permettre l'introduction de vis de fixation dans les ouvertures alignées du flasque 19, des semelles 18 et 17 et de la tôle 12. On prévoit généralement deux ensembles d'ouvertures venant en position superposée pour réaliser la fixation de l'ensemble d'obturation de l'ouverture 13 de la tôle 12 par deux ensembles à vis et écrou. Les trous traversant le bord périphérique de la semelle supérieure 17 sont entourés, sur la face de la semelle 17 venant s'appliquer contre la tôle 12, par une nervure 17b dont une partie est confondue avec la nervure 17a disposée suivant toute la périphérie du bord de la semelle intérieure 17. On assure ainsi une fermeture étanche autour des passages de vis à travers la semelle intérieure 17.

Les semelles 17 et 18 sont réalisées chacune en une seule pièce à partir d'un matériau élastomère.

La semelle externe 18 est réalisée en un matériau élastomère ayant une bonne résistance et en particulier une bonne résistance à la chaleur, ce matériau devant être capable de supporter une température de 150°C.

Pour effectuer le montage de l'ensemble d'obturation de l'ouverture 13 sur le véhicule automobile, dans un premier temps, on engage à l'intérieur des manchons doubles 21 et 22 les câbles 6a et 6b, de telle manière que le câble 6a et le câble 6b soient solidaires des manchons par serrage élastique des manchons sur les câbles et guidés de manière continue chacune dans un alésage du manchon 21 et dans un alésage du manchon 22. Les manchons 21 et 22 sont placés en appui l'un sur l'autre, de manière que leurs alésages soient dans le prolongement l'un de l'autre, comme représenté sur la figure 2. Les semelles 17 et 18 sont emboîtées l'une sur l'autre et superposées.

On fixe aux extrémités des câbles 6a et 6b les éléments de raccordement aux composants du véhicule automobile.

L'ensemble constitué par les semelles 17 et 18 et les câbles 6a et 6b engagés dans les manchons 21 et 22 est mis en place en-dessous de la tôle de carrosserie 12, au niveau de l'ouverture 13, de telle manière que les ouvertures traversantes et superposées des bords périphériques des flasques 17 et 18 se trouvent dans l'alignement d'ouvertures de traversée de la tôle 12. Le flasque 19 est ensuite mis en place au contact du bord périphérique de la semelle inférieure 18, de manière que les ouvertures de traversée du flasque 19, qui recouvre parfaitement les bords périphériques des semelles 17 et 18, se trouvent en vis-à-vis des ouvertures traversantes des semelles 17 et 18 et de la tôle 12.

Le flasque est serré contre le bord périphérique des semelles 17 et 18, par l'intermédiaire de vis (et éventuellement d'écrous) engagées dans les ouvertures de la tôle de carrosserie 12. Le montage de l'ensemble d'étanchéité est effectué par le dessous de l'habitacle 3, les extrémités supérieures des câbles 6a et 6b étant introduites dans l'habitacle 3, par le passage interne du fourreau 16 qui constitue un puits d'accès débouchant dans l'habitacle 3.

Lorsque les semelles 17 et 18 sont mises en place, comme représenté sur la figure 2, les manchons doubles 21 et 22 se trouvent dans le prolongement axial l'un de l'autre, de manière que les alésages de ces manchons alignés l'un par rapport à l'autre assurent un guidage continu des câbles 6a et 6b. De plus, les manchons 21 et 22 en appui l'un sur l'autre, suivant la surface d'appui 23, permettent de ménager entre les parois des semelles 17 et 18 un espace fermé assurant une très bonne isolation acoustique entre l'extérieur de l'habitacle et l'espace intérieur du fourreau 16 communiquant avec l'habitacle 3 du véhicule automobile. Le dispositif de passage étanche 10 permet également d'éviter des introductions d'eau ou de poussières ou encore de gaz d'échappement ou de vapeur dans l'habitacle du véhicule automobile.

L'espace intérieur du fourreau 16 et l'espace fermé entre les semelles 17 et 18 peuvent être remplis, au moins partiellement par des garnitures respectives de forme adaptée 24 et 25 en mousse de matière plastique par exemple, par exemple en mousse de polyuréthanne (60 g/l), pour améliorer l'isolation acoustique.

En outre, du fait de la souplesse des parois des semelles 17 et 18, les câbles 6a et 6b engagés dans les manchons 21 et 22 peuvent se déplacer sans contrainte, dans toutes les directions avec une amplitude maximale de l'ordre de 10 mm, sous l'effet des déplacements du moteur par rapport à la carrosserie.

Le dispositif de passage étanche suivant l'invention présente de très bonnes caractéristiques fonctionnelles, tout en étant réalisé à partir d'un faible nombre de pièces de forme simple qui peuvent être montées facilement sur le véhicule automobile.

Les pièces constitutives du dispositif de passage étanche réalisées en élastomère peuvent être fabriquées en série de manière peu coûteuse, par moulage.

L'invention ne se limite pas au mode de réalisation qui a été décrit.

C'est ainsi que le fourreau 16 et les semelles 17 et 18 peuvent présenter une forme géométrique différente de celles qui ont été décrites et représentées.

En particulier, les fourreaux des semelles peuvent être prévues pour assurer le passage d'un seul câble, de deux câbles ou de plus de deux câbles.

La partie déformable des semelles en matériau élastomère peut être réalisée sous une forme quelconque et présenter tout type de plis ou d'ondes permettant d'assurer la présence d'un espace entre les parois centrales des semelles et une bonne déformabilité de ces parties centrales auxquelles sont liés les fourreaux de passage des câbles.

L'invention s'applique à tout type de véhicules automobiles comportant une boîte de vitesse commandée à partir de câbles.

## Revendications

1. Dispositif de passage étanche d'au moins un câble (6a, 6b) de commande d'une boîte de vitesses (7), entre l'habitacle (3) d'un véhicule automobile dans lequel est disposée une commande manuelle (5, 6), reliée au câble (6a, 6b) et une zone (8) extérieure à l'habitacle (3), dans laquelle est située la boîte de vitesses (7), à travers une paroi de carrosserie (12) et une paroi d'isolation acoustique (14) de l'habitacle (3) comportant chacune une ouverture de traversée (13, 15), **caractérisé par le fait qu'**il comporte :
- un fourreau tubulaire (16) de passage de câbles (6a, 6b) en matériau élastomère comportant, à une première extrémité longitudinale, une lèvre d'appui périphérique (16a) débordant vers l'extérieur, pour sa mise en appui sur une surface externe de la paroi d'isolation (14) dirigée vers l'habitacle (3), autour de l'ouverture de la paroi d'isolation acoustique (14) et, à une seconde extrémité longitudinale, une lèvre d'accrochage (16b) sur un rebord (12a) de la paroi de carrosserie (12) entourant l'ouverture (13) de la paroi de carrosserie,
- une première et une seconde semelles (17, 18) en matériau élastomère, d'obturation de l'ouverture (13) de la paroi de carrosserie (12), comportant chacune un rebord périphérique d'appui sensiblement plat débordant vers l'extérieur, une paroi profilée à l'intérieur du rebord d'appui et un manchon (21, 22) de traversée de câbles (6a, 6b) dans une partie centrale de la paroi profilée,
- ainsi qu'un flasque métallique (19) d'une forme telle qu'il puisse recouvrir, dans une position d'assemblage et de montage du dispositif de passage (10) sur le véhicule automobile, les rebords périphériques superposés des semelles (17, 18), mises en appui autour de l'ouverture (13) de la paroi de carrosserie (12), du côté opposé à l'habitacle (3), dont les fourreaux (21, 22) en appui mutuel dans le prolongement axial l'un de l'autre assurent le passage continu du câble (6a, 6b) et une disposition relative des parois profilées de la première et de la seconde semelle (17, 18), telle qu'un espace fermé soit ménagé entre les deux parois profilées, et
- des moyens (20) de fixation mécaniques du flasque métallique (19) et des semelles (17, 18) sur la paroi de carrosserie (12).

2. Dispositif suivant la revendication 1, **caractérisé par le fait que** les semelles (17, 18) comportent, dans leur partie centrale, des manchons doubles (21, 22) comportant chacun deux alésages pour le passage avec serrage et le guidage de deux câbles de commande (6a, 6b).

3. Dispositif suivant l'une quelconque des revendications 1 et 2, **caractérisé par le fait que** le fourreau (16) présente une section transversale de forme sensiblement rectangulaire et des parois latérales sensiblement planes et inclinées par rapport à des plans d'appui de la lèvre d'appui (16a) et de la lèvre d'accrochage (16b) suivant une direction correspondant à la direction axiale longitudinale du fourreau (16) et présente une forme adaptée pour permettre les déplacements en service du câble de commande (60, 66) par rapport à la paroi de carrosserie (12) sans contraintes excessives et pour assurer une bonne résistance aux semelles (17, 18).

4. Dispositif suivant l'une quelconque des revendications 1 à 3, **caractérisé par le fait que** la paroi profilée de chacune des semelles (17, 18) comporte des plis ou ondes de déformation.

5. Dispositif suivant l'une quelconque des revendications 1 à 4, **caractérisé par le fait que** l'une des semelles (17), ou semelle interne, disposée du côté intérieur de l'habitacle (3) comporte sur une surface de son bord périphérique destiné à venir en appui contre la paroi de carrosserie (12), au moins une nervure périphérique (17a) en saillie destinée à être écrasée contre la paroi de carrosserie (12) pour réaliser une étanchéité sous l'effet d'un serrage du flasque (19).

6. Dispositif suivant l'une quelconque des revendications1 à 5, **caractérisé par le fait que** les bords périphériques des semelles (17, 18), la tôle de carrosserie (12) et le flasque (19) sont traversés par des ouvertures qui sont placées de manière superposée pour le montage du dispositif de passage étanche (10) sur le véhicule automobile, les moyens mécaniques de fixation (20) étant constitués par des vis ou des ensembles à vis et écrous, les vis étant introduites dans les ouvertures en vis-à-vis du flasque (19), des semelles (17, 18) et de la paroi de carrosserie(12).

7. Dispositif suivant la revendication 6, **caractérisé par le fait que** la semelle interne (17) comporte, sur une surface de son bord périphérique destiné à venir en contact avec la paroi de carrosserie (12), une nervure en saillie (17b) autour de chacune des ouvertures de passage de vis.

8. Dispositif suivant l'une quelconque des revendications 1 à 7, dans le cas où la paroi d'isolation (14) comporte un tapis souple (14b), **caractérisé par le fait que** la lèvre d'appui (16a) vient en contact avec pression sur la surface externe du tapis (14b), la lèvre d'appui (16a) du fourreau (16) et le tapis (14b) se déformant de manière à assurer une étanchéité entre le fourreau (16) et la paroi (14).

9. Dispositif suivant l'une quelconque des revendications 1 à 8, **caractérisé par le fait que** l'espace interne du fourreau (16) et l'espace fermé entre les semelles (17, 18) sont au moins partiellement remplis par une garniture d'isolation acoustique respective (24, 25) en mousse de matière plastique.

## Patentansprüche

1. Vorrichtung zur dichten Durchführung mindestens eines Kabels (6a,6b) zur Steuerung eines Schaltgetriebes (7) zwischen dem Insassenraum (3) eines Kraftfahrzeugs, in dem eine mit dem Kabel (6a,6b) verbundene Handsteuerung (5,6) angeordnet ist, und einem Bereich (8) außerhalb des Insassenraums (3), in dem das Schaltgetriebe (7) angeordnet ist, durch eine Karosseriewand (12) und eine Wand (14) zur Schallisolation des Insassenraums (3), die jeweils eine Durchführungsöffnung (13,15) aufweisen, **dadurch gekennzeichnet, dass** sie folgendes aufweist:
- eine rohrförmige Muffe (16) zur Durchführung von Kabeln (6a,6b) aus Elastomermaterial, die an einem ersten Längsende eine nach außen vorstehende Umfangsauflagelippe (16) für ihr Aufliegen auf eine dem Insassenraum (3) zugewandte Außenfläche der Isolationswand (14) um die Öffnung der Schallisolationswand (14) herum und an einem zweiten Längsende eine Lippe (16b) zum Einhaken an einer die Öffnung (13) der Karosseriewand (12) umgebenden Randabwinklung (12a) der Karosseriewand aufweist,
- eine erste und eine zweite Sohle (17,18) aus Elastomermaterial zum Verschließen der Öffnung (13) der Karosseriewand (12), die jeweils einen im wesentlichen flachen, nach außen vorstehenden Umfangsauflagerand, eine profilierte Wand im Inneren des Auflagerands und eine Buchse (21,22) zur Durchführung von Kabeln (6a,6b) in einem zentralen Teil der profilierten Wand aufweisen,
- sowie einen Metallflansch (19) mit einer solchen Form, dass er in einer Stellung des Zusammenbaus und der Montage der Durchführungsvorrichtung (10) an dem Kraftfahrzeug die einander überlagerten Umfangsränder der Sohlen (17,18) bedecken können, die um die Öffnung (13) der Karosseriewand (12) herum auf der dem Insassenraum (3) entgegengesetzten Seite aufliegen und deren Buchsen (21,22), die in gegenseitiger axialer Verlängerung aneinander anliegen, den kontinuierlichen Durchgang des Kabels (6a,6b) und eine solche Anordnung der profilierten Wände der ersten und der zweiten Sohle (17,18) zueinander gewährleisten, dass zwischen den beiden profilierten Wänden ein geschlossener Raum gebildet wird, und
- mechanische Mittel (20) zur Befestigung des Metallflansches (19) und der Sohlen (17,18) an der Karosseriewand (12).

2. Vorrichtung nach Anspruch 1, **dadurch gekennzeichnet, dass** die Sohlen (17,18) in ihrem zentralen Teil doppelte Buchsen (21,22) aufweisen, die jeweils zwei Bohrungen für den klemmenden Durchgang und die Führung von zwei Steuerkabeln (6a,6b) besitzen.

3. Vorrichtung nach einem der Ansprüche 1 und 2, **dadurch gekennzeichnet, dass** die Muffe (16) einen Querschnitt von im wesentlichen rechteckiger Form und im wesentlichen ebene Seitenwände aufweist, die bezüglich Auflageebenen der Auflagelippe (16a) und der Einhaklippe (16b) in einer der axialen Längsrichtung der Muffe (16) entsprechenden Richtung geneigt sind, und eine angepasste Form besitzt, um im Betrieb die Bewegungen des Steuerkabels (60,66) bezüglich der Karosseriewand (12) ohne zu starke Belastungen zu gestatten und um den Sohlen (17,18) eine gute Festigkeit zu verleihen.

4. Vorrichtung nach einem der Ansprüche 1 bis 3, **dadurch gekennzeichnet, dass** die profilierte Wand jeder der Sohlen (17,18) Verformungsfalten oder -wellen aufweist.

5. Vorrichtung nach einem der Ansprüche 1 bis 4, **dadurch gekennzeichnet, dass** eine der Sohlen (17) oder innere Sohle, die auf der Innenseite des Insassenraums (3) angeordnet ist, auf einer Fläche ihres Umfangsrands, der dazu bestimmt ist, an der Karosseriewand (12) zum Aufliegen zu kommen, mindestens eine vorstehende Umfangsrippe (17a) aufweist, die dazu bestimmt ist, gegen die Karosseriewand (12) gequetscht zu werden, um unter der Wirkung einer Anpressung des Flansches (19) eine Abdichtung herzustellen.

6. Vorrichtung nach einem der Ansprüche 1 bis 5, **dadurch gekennzeichnet, dass** die Umfangsränder der Sohlen (17,18), das Karosserieblech (12) und der Flansch (19) von einander überlagerten Öffnungen für die Montage der dichten Durchführungsvorrichtung (10) an dem Kraftfahrzeug durchquert werden, wobei die mechanischen Befestigungsmittel (20) aus Schrauben oder Schrauben-Mutter-Einheiten bestehen, wobei die Schrauben in die einander gegenüberstehenden Öffnungen des Flansches (19), der Sohlen (17,18) und der Karosseriewand (12) eingeführt werden.

7. Vorrichtung nach Anspruch 6, **dadurch gekennzeichnet, dass** die Innensohle (17) auf einer Fläche ihres Umfangsrands, der dazu bestimmt ist, mit der Karosseriewand (12) in Kontakt zu kommen, um jede der Öffnungen zum Durchgang von Schrauben herum eine vorstehende Rippe (17b) aufweist.

8. Vorrichtung nach einem der Ansprüche 1 bis 7 in dem Fall, in dem die Isolationswand (14) einen flexiblen Überzug (14b) aufweist, **dadurch gekennzeichnet, dass** die Auflagelippe (16a) unter Druck auf der Außenfläche des Überzugs (14b) in Kontakt kommt, wobei die Auflagelippe (16a) der Muffe (16) und der Überzug (14b) sich so verformen, dass eine Abdichtung zwischen der Muffe (16) und der Wand (14) gewährleistet wird.

9. Vorrichtung nach einem der Ansprüche 1 bis 8, **dadurch gekennzeichnet, dass** der Innenraum der Muffe (16) und der geschlossene Raum zwischen den Sohlen (17,18) jeweils mindestens teilweise mit einer Schallisolationseinlage (24,25) aus Kunststoffschaum gefüllt sind.

## Claims

1. A bushing for passing, in a sealed manner, at least one cable (6a, 6b) for operating a gearbox (7) between the passenger compartment (3) of an automobile vehicle, in which there is disposed a manual control (5, 6) connected to the cable (6a, 6b), and an area (8) external to the passenger compartment (3), in which the gearbox (7) is situated, through a bodywork wall (12) and an acoustical insulation wall (14) of the passenger compartment (3), each wall having an opening (13, 15) through it, which bushing is **characterised in that** it includes:
- a tubular elastomer material sheath (16) through which the cables (6a, 6b) pass and which includes, at a first longitudinal end, an outwardly projecting peripheral bearing lip (16a) adapted to bear on an external surface of the insulation wall (14) facing towards the passenger compartment (3), around the opening in the acoustical insulation wall (14), and, at a second longitudinal end, a lip (16b) for attaching it to a rim (12a) on the bodywork wall (12) around the opening (13) in the bodywork wall,
- first and second elastomer material boots (17, 18) for closing off the opening (13) in the bodywork wall (12) and each having an outwardly projecting substantially flat peripheral bearing rim, a profiled wall inside the bearing rim, and a sleeve (21, 22) in a central part of the profiled wall and through which the cables (6a, 6b) pass,
- a metal flange (19) which has a shape such that, when the bushing (10) is assembled and mounted on the automobile vehicle, it bears around the opening (13) in the bodywork wall (12), on the side opposite the passenger compartment (3), and covers the superposed peripheral rims of the boots (17, 18), whose axially aligned sheaths (21, 22) bear on each other and provide a continuous passage for the cable (6a, 6b) and a relative disposition of the profiled walls of the first and second boots (17, 18) such that a closed space is formed between the two profiled walls, and
- mechanical fixing means (20) for fixing the metal flange (19) and the boots (17, 18) to the bodywork wall (12).

2. A bushing according to claim 1, **characterised in that** the boots (17, 18) have in their central portion double sleeves (21, 22) each including two close-fitting bores for guiding two actuator cables (6a, 6b).

3. A bushing according to either claim 1 or claim 2, **characterised in that** the sheath (16) has a substantially rectangular cross-section and substantially plane lateral walls inclined to bearing planes of the bearing lip (16a) and the attachment lip (16b) in a direction corresponding to the longitudinal axial direction of the sheath (16) and has a shape adapted to allow relatively unconstrained movement of the actuator cable (60, 66) relative to the bodywork wall (12) in service and to reinforce the boots (17, 18).

4. A bushing according to any of claims 1 to 3, **characterised in that** the profiled wall of each boot (17, 18) incorporates deformations in the form of pleats or undulations.

5. A bushing according to any of claims 1 to 4, **characterised in that** one of the boots (17), or the inner boot, which is disposed on the interior side of the passenger compartment (3), has on a surface of its peripheral edge portion adapted to bear against the bodywork wall (12) at least one projecting peripheral rib (17a) adapted to be crushed against the bodywork wall (12) to provide a seal on clamping the flange (19).

6. A bushing according to any of claims 1 to 5, **characterised in that** the peripheral edge portions of the boots (17, 18), the bodywork plate (12) and the flange (19) have openings through them which are superposed to mount the bushing (10) on the automobile vehicle, the mechanical fixing means (20) comprising screws or nuts and bolts, the screws or bolts being inserted into the aligned openings in the flange (19), the boots (17, 18) and the bodywork wall (12).

7. A bushing according to claim 6, **characterised in that** the inner boot (17) has, on a surface of its peripheral edge portion adapted to come into contact with the bodywork wall (12), a projecting rib (17b) around each of the openings through which a screw or bolt passes.

8. A bushing according to any of claims 1 to 7, wherein the insulation wall (14) includes a flexible facing (14b), and **characterised in that** the bearing lip (16a) is pressed into contact with the external surface of the facing (14b) and the bearing lip (16a) on the sheath (16) and the facing (14b) are deformed to provide a seal between the sheath (16) and the wall (14).

9. A bushing according to any of claims 1 to 8, **characterised in that** the internal space of the sheath (16) and the closed space between the boots (17, 18) are at least partly filled with a respective plastics material foam acoustical insulation packing (24, 25).
